# EUROPEAN PATENT SPECIFICATION

(11) **EP 3 102 391 B1**
(45) Date of publication and mention of the grant of the patent: **26.07.2017**
(21) Application number: 16701614.6
(22) Date of filing: 25.01.2016
(51) Int. Cl.: B29C 67/00, B29C 33/38, B29C 33/40

(54) **FUSED DEPOSITION MODELING BASED MOLD FOR MOLDING AND REPLICATING OBJECTS, METHOD FOR ITS MANUFACTURE AND FUSED DEPOSITION MODELING 3D PRINTER**
DURCH FUSED DEPOSITION MODELING HERGESTELLTE FORM ZUM FORMEN UND NACHBILDEN VON OBJEKTEN, VERFAHREN ZU DEREN HERSTELLUNG SOWIE FUSED DEPOSITION MODELING 3D DRUCKVORRICHTUNG
MOULE OBTENUE PAR MODÉLISATION PAR DÉPÔT DE FIL EN FUSION POUR LE MOULAGE ET LA RÉPLICATION D'OBJETS, PROCÉDÉ POUR SA FABRICATION ET SYSTÈME DE MODÉLISATION EN 3D PAR DÉPÔT DE FIL EN FUSION

(30) Priority: 03.02.2015 EP 15153570
(43) Date of publication of application: 14.12.2016
(73) Proprietor: Philips Lighting Holding B.V., 5656 AE Eindhoven (NL)
(72) Inventor: BERBEN, Edward Theodorus Maria, 5656 AE Eindhoven (NL); HIKMET, Rifat Ata Mustafa, 5656 AE Eindhoven (NL)
(74) Representative: van Dijken, Albert
(86) International application number: PCT/EP2016/051464
(87) International publication number: WO 2016/124432

(56) References cited:
- EP-A1- 0 521 813
- US-A- 5 216 616
- US-A1- 2014 339 745

## Description

### FIELD OF THE INVENTION

The invention relates to a method for manufacturing a 3D item, especially a mold. The invention further relate to a method for producing an object using a mold, such as said mold. Yet, the invention also relates to a mold, such as obtainable with the method for manufacturing the 3D item. The invention further relates to a 3D printer, which can especially be used to execute the method for manufacturing said 3D item, especially said mold.

### BACKGROUND OF THE INVENTION

Fused deposition modeling (FDM) is known in the art. EP0833237 describes for instance an apparatus incorporating a movable dispensing head provided with a supply of material which solidifies at a predetermined temperature, and a base member, which are moved relative to each other along "X", "Y," and "Z" axes in a predetermined pattern to create three-dimensional objects by building up material discharged from the dispensing head onto the base member at a controlled rate. The apparatus is preferably computer driven in a process utilizing computer aided design (CAD) and computer-aided (CAM) software to generate drive signals for controlled movement of the dispensing head and base member as material is being dispensed. Three-dimensional objects may be produced by depositing repeated layers of solidifying material until the shape is formed. Any material, such as self-hardening waxes, thermoplastic resins, molten metals, two-part epoxies, foaming plastics, and glass, which adheres to the previous layer with an adequate bond upon solidification, may be utilized. Each layer base is defined by the previous layer, and each layer thickness is defined and closely controlled by the height at which the tip of the dispensing head is positioned above the preceding layer.

Within the next 10-20 years, digital fabrication will increasingly transform the nature of global manufacturing. One of the aspects of digital fabrication is 3D printing. Currently many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerisable material which is cured after each deposition to form a solid structure. While this technique produces smooth surfaces the photo curable materials are not very stable and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Another term for FDM is "fused filament fabrication" (FFF). Herein, the term "filament 3D printing" (FDP) is applied, which is considered to be equivalent to FDM or FFF. In general, FDM printers use a thermoplastic filament, which is heated to its melting point and then extruded, layer by layer, (or in fact filament after filament) to create a three dimensional object. FDM printers are relatively fast and can be used for printing complicated object.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polystyrene (PS), PE (such as expanded- high impact-Polythene (or polyethene), Low density (LDPE) High density (HDPE)), PVC (polyvinyl chloride) Polychloroethene, etc.. Optionally, the 3D printable material comprises a 3D printable material selected from the group consisting of Urea formaldehyde, Polyester resin, Epoxy resin, Melamine formaldehyde, Polycarbonate (PC), rubber, etc.. Optionally, the 3D printable material comprises a 3D printable material selected from the group consisting of a polysulfone, a polyether sulfone, a polyphenyl sulfone, an imide (such as a poly ether imide) etc.

The term "3D printable material" may also refer to a combination of two or more materials. In general these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (Tg) and /or a melting point (Tₘ), and the printer head action comprises heating the one or more of the receiver item and 3D printable material deposited on the receiver item to a temperature of at least the glass transition temperature, especially to a temperature of at least the melting point. In yet another embodiment, the 3D printable material comprises a (thermoplastic) polymer having a melting point (Tₘ), and the printer head action comprises heating the one or more of the receiver item and 3D printable material deposited on the receiver item to a temperature of at least the melting point. Specific examples of materials that can be used can e.g. be selected from the group consisting of acrylonitrile butadiene styrene (ABS), polylactic acid (PLA), polycarbonate (PC), polyamide (PA), polystyrene (PS), lignin, rubber, etc.

However, it appeared that FDM is not especially suitable for making molds. Objects printed by FDM have rough surfaces and this is not desired in for instance optical applications where a smooth surface structure is required. Furthermore, when the structure is rather rough it becomes difficult to release the replicated part out of the mold. FDM also usually leads to structures which are not air tight. Again this is a problem in the applications for e.g. silicone molding where vacuum is applied for removing the air. Liquid gets into these holes making the surface rough and also makes it difficult to release the replicated structure or molded shape from the mold.

EP0521813A1 discloses a composite forming tool fabricated by securing shapeable filler blocks between composite headers and contouring the blocks to match the shape of the headers, to form a support structure with a continuous surface. Layers of uncured, composite laminates are laid up over the support structure and cured.

US5216616A discloses a system and method for producing a 3D object. As a support environment, a series of webs or columns, or encapsulation may be provided for providing a support environment for the object.

### SUMMARY OF THE INVENTION

Hence, it is an aspect of the invention to provide an alternative method for manufacturing a 3D item ("item"), especially a mold, which preferably further at least partly obviates one or more of above-described drawbacks. It is also an aspect of the invention to provide an alternative method for producing an 3D object ("object") using a mold, such as the herein described mold especially obtainable with the herein described method for manufacturing a 3D item, which method for producing said object preferably further at least partly obviates one or more of above-described drawbacks. Yet, it is an aspect of the invention to provide an alternative mold, which preferably further at least partly obviates one or more of above-described drawbacks, and which may especially be obtainable with the herein described method for manufacturing a 3D item. Furthermore, it is an aspect of the invention to provide an alternative 3D printer, which preferably further at least partly obviates one or more of above-described drawbacks, and which may especially be used to execute the herein described method for manufacturing a 3D item.

Here we suggest especially using FDM printing for making molds which can be used for molding objects and/or replicating structures on a readymade structure such as a glass lens.

Hence, in a first aspect the invention provides a method for manufacturing a 3D item, especially a fused deposition modeling method for manufacturing a 3D item, wherein the 3D item comprises an outer layer and a support structure with cavities, wherein the outer layer at least partly encloses the support structure, wherein the method comprises: (a) a 3D printing stage comprising 3D printing with 3D printable material the outer layer and the support structure (to provide 3D printed material), and optionally at least partly filling the cavities with a filler material; and optionally (b) a post-treatment stage comprising post treating at least part of the outer layer, especially for reducing surface roughness (of the outer layer). Especially, one or more of (i) the filling of the cavities is applied and (ii) the post-treatment is applied, even more especially both are applied. Therefore, the method for manufacturing a 3D item may include one or more of (i) at least partly filling the cavities with a filler material, and (ii) post treating at least part of the outer layer.

Hence, the method of the invention can especially be used to provide in a further aspect a 3D item, especially a mold comprising an outer layer and a support structure with cavities, wherein the outer layer at least partly encloses the support structure, and wherein the cavities are at least partly filled with filler material. Likewise, the method of the invention can especially be used to provide in a further aspect a 3D item, especially a mold comprising an outer layer and a support structure with cavities, wherein the outer layer and the support structure differ in one or more of (a) chemical composition, (b) density, and (c) surface texture. Especially, the method of the invention can especially be used to provide in a further aspect a 3D item, especially a mold comprising an outer layer and a support structure with cavities, wherein the outer layer at least partly encloses the support structure, and wherein the cavities are at least partly filled with filler material, wherein the outer layer and the support structure differ in one or more of (a) chemical composition, (b) density, and (c) surface texture.

Hence, especially the herein described 3D item, even more especially a 3D item being a mold, may be obtainable with the herein described method for manufacturing a 3D item (especially a mold). Hence, especially the 3D item comprises a mold, yet even more especially the 3D item is a mold.

It surprisingly appears that 3D items obtainable with this method may have enough strength and/or thermal stability to be used as mold, e.g. in an injection molding (replicating) process. It also surprisingly appears that smooth surfaces may be created, which allows the 3D items obtainable with this method to be used as mold. Hence, in embodiments the 3D items obtainable with the method for manufacturing the 3D item and/or the 3D item per se may especially be configured as mold. Hence, such mold can be used in other replicating methods.

Therefore, the invention provides an excellent way to make easily a relatively cheap mold for replicating methods. Hence, the present invention allows a much faster and cheaper adaptation for replication methods, as the classical methods include an expensive and complicated making of molds, often at places rather remote from the places where the replicating methods are applied, whereas with the present invention a replicator may easily make a mold or order such mold from a local provider. The present invention can especially be used for easy and quick late stage adaption of devices, which adaptation may even be customized and/or be used for relatively low replication number, whereas for state of the art molds in general replication can only commercially be done with high replication numbers.

Molding or moulding is the process of manufacturing by shaping liquid or pliable raw material using a for instance rigid frame or body called a mold or matrix. A mold or mould is a hollowed-out frame or body that can be filled with a liquid or pliable material like especially a plastic material. The liquid hardens or sets inside the mold, adopting its shape.

The 3D item herein is especially a body that includes an outer layer at least partially or even entirely, circumferentially surrounding or enclosing the body. Especially, the 3D item may thus include a (molding) cavity which allows the use of the 3D item as mold. The (molding) cavity has a surface or outer surface provided by said outer layer. The body of the 3D item itself may include (smaller) cavities (herein also indicated as "internal cavities), as, as indicated above, 3D printing may be sped up by not filling non-functional bulk areas completely, but providing a support structure with such (internal) cavities. Hence, in specific embodiments the 3D item comprises a support structure enclosed by the outer layer. For many applications of such 3D item this may be an ideal solution to provide in a quick way such 3D item. However, specific applications of such 3D items, such as when using as mold, it appears that the provided 3D item does not allow necessary processing like surface smoothening or using the mold at higher temperature. When using the 3D item at higher temperature or when surface smoothening the outer surface, it appears that conventional molds with a (3D) support structure with internal cavities are substantially not useable.

Hence, to this end the invention especially provides at least partially filling the (internal) cavities with a filler material. Alternatively or additionally, to this end the invention provides a post treatment of at least part of the outer layer. Especially, to this end the invention especially provides at least partially filling the (internal) cavities with a filler material, and a post treatment of at least part of the outer layer.

Here we suggest (in embodiments) making the support structures interconnected so that the areas with empty space can be filled with ease so that it can become a filled item. It can be filled during the printing process by a filler material, such as a powder or slurry of particles. The filler material does in embodiments not need to have high mechanical strength. It can also be filled after printing. For this purpose it is most suitable to use materials which are liquid and then can be polymerized. For this purpose, one or more of polyacrylates, polyester and epoxy resins can be used. Alternatively or additionally, for improving the heat conductivity of the 3D item, which is important for injection molding applications, heat conducting particles such as metals and ceramics (e.g. boron nitride and aluminum oxide etc.), graphite can be used.

To strengthen the structure, a variety of materials can be applied (as filler material for filling the (internal) cavities). For increasing thermal conductivity, especially materials are applied that have a (substantial) higher thermal conductivity than the support structure (material. Hence, in in embodiment the filler material comprises a material having a higher thermal conductivity than the support structure. Especially, the filler material comprises a material having an at least 2 times, such as at least 5 times, especially at least 10 times, such as at least 20 times yet even more especially at least 50times, such as at least 100 times higher thermal conductivity than the support structure (and the outer layer).

For applying the filler material to the 3D item (under construction), for instance the herein described 3D printer may be applied. Suitable printers may e.g. comprise printers having multiple jets. However, alternatively or additionally, the filler material may also be provided in other ways than using jets (see also below). Further, dependent upon the type of (support and/or filler) materials the filler material may be provided during the printing of the 3D item and/or after having substantially printed the 3D item. Further, not all internal cavities may have to be filled and/or not all internal cavities have to be entirely filled. Hence, the method of the invention includes "at least partly filling the cavities with the filler material".

The filler material may for instance be provided as powder and/or as liquid. The term "filler material" may also refer to a plurality of (different) filler materials. Further, the filler material may be provided as liquid, such as a slurry, and then be dried and/or hardened. Hence, in an embodiment the filler material before filling the cavities comprises a liquid, such as a slurry, comprising one or more of metal particles (such as one or more of copper and brass), ceramic particles (such as e.g. especially comprising the above-mentioned boron nitride and aluminum oxide), and carbon particles (such as especially comprising the above-mentioned graphite), and wherein the method further comprises a transformation stage comprising transforming the liquid, such as the slurry, in the cavities in a solid filler material, wherein the transformation stage includes one or more of curing and drying. In general, the filling with the filler material will be done before the post-treatment stage. However, alternatively or additionally, in an embodiment the filling with the filler material may be done after the post treatment stage. As will be clear from the above, the chemical composition of the filler material is different from the chemical composition of the support structure (and in general also from the chemical composition of the outer layer).

Hence, the 3D printing stage may especially comprise the 3D printing with 3D printable material the outer layer and the support structure to provide 3D printed material, and optionally at least partly filling the cavities with a filler material. As indicated above, printing and filling may be done with the same apparatus. Further, printing and filling can be done during the same process and printing and filling may also be alternated. Further, part of the outer layer may be provided in an initial stage and part thereof may be provided in a later stage. Hence, the above indicated printing stage describes the actions that are substantially necessary to make a ready 3D item, but the summary of the actions therein described does not imply a specific necessary order, as will be clear to a person skilled in the art. Further, optionally the 3D printing stage may include a processing the 3D printable material to provide said 3D printed material. Such processing may include one or more of drying, curing, gluing, heating, irradiating with (e.g. one or more of UV and IR), applying pressure, etc. etc. Hence, in an embodiment the 3D printable material comprises a curable material, and wherein the 3D printing method includes curing at least part of the printable 3D printable material to provide said 3D printed material. Curing of the printable material is especially (at least partially) executed during the 3D printing stage. Especially, the 3D printable material comprises fused deposition modeling material, i.e. material than can be used to execute a FDM printing (manufacturing) process.

Having generated the 3D item with the support structure and outer layer, and optionally with filled internal cavities (filled with filler material), in specific embodiment the post-treatment stage may be commenced. In yet other embodiments, the post-treatment stage may be omitted. The invention is however especially described with reference to the post-treatment (stage).

Note that in specific embodiments after the post treatment (also) at least part of the filler material may be introduced into the internal cavities. Would such embodiment be chosen, then in general after filling a closure may be provided to close the (opening to the) internal cavities. In general, however, the filling with the filler material precedes the post-treatment stage. The term "closure" may also refer to a plurality of closures.

To return to the post treatment stage, this is a stage wherein especially the outer layer is treated, such as to (further) smoothen this outer layer. FDM is a technique which tends to form a rough surface. However when such a mold needs to have good release properties and also smooth surfaces in applications such as replicating lenses. The air gaps which remain during the printing also need to be removed so that air can be removed from the monomer such as silicone prior to polymerization. When the mechanical integrity of the mold is increased such as the way described before one can apply various techniques to smoothen the surface. For this purpose melting by hot flame or laser, or solvent dissolution can be used. For solvent smoothing most useful materials are poly carbonate, ABS, PMMA and polystyrene. For melting based smoothing one can also make use of crystalline materials such as Nylon, polyalkanes, such as polyethylene, etc.. When the mold needs to be used at temperatures above the melting or glass transition of the material used for FDM printing the surface of the material becomes soft and can adhere. For this purpose it is - amongst others - suggested to coat the outer layer (surface) of the mold with a material which can partially dissolve and penetrate the FDM printed material. Subsequently it can be cross-linked to form a hard surface (e.g. one or more of poly acrylates, polyester and epoxy resins may be applied) which cannot be dissolved or melted. For laser surface modification laser wavelength absorbing dyes might be needed in the polymer. These dyes can be added to the polymer or to the surface. Hence, in an embodiment the printable material used for providing at least part of (at least) the outer layer may include a radiation absorbing material, especially having a higher absorption for radiation than the printable material (for providing at least part of (at least) the outer layer), especially for radiation in one or more of UV, IR and visible. Alternatively or additionally, at least part of the outer layer may be provided with such radiation absorbing material, such as by providing a coating to at least part of the outer layer.

Hence, for instance the post-treatment may include a kind of polishing of the outer layer, or at least part thereof. In a specific embodiment, the post-treatment stage may comprise one or more of (a) heating (such as by a laser and/or a flame) at least part of the outer layer, (b) solvent dissolving at least part of the outer layer, and (c) coating at least part of the outer layer. With such methods, the outer layer may obtain a smoother surface than obtainable with the 3D printing, especially with FDM 3D printing. With such method, the outer layer will change from especially a substantially virgin layer to a modified layer. Hence, in embodiments the thus obtainable outer layer and the support structure differ in one or more of (a) chemical composition, (b) density, and (c) surface texture. Hence, in an embodiment the outer layer and the support structure differ in chemical composition.

For instance, a coating of another material may be provided, e.g. also optionally including a cross-link of material provided to the outer layer to provide said coating. Alternatively or additionally, in an embodiment outer layer and the support structure differ density. For instance, by heating the (surface of the) outer layer may become more dense than the support structure, which may especially be of the same material. Alternatively or additionally, in an embodiment the outer layer and the support structure differ in surface texture. For instance, when dissolving, or swelling, part of the (surface of the) outer layer, the surface may be smoothened. Hence, each of these options may lead to an outer layer having less surface roughness and having a more smooth texture than the virgin outer layer (and the surface of the support structure which may substantially be of the same material as the outer layer). When measured with a mechanical profile meter in average the height difference between an adjacent maximum and minimum height along a measured line should preferably be lower than 10 micron, more preferably less than 5 micron and most preferably less than 1 micron.

As indicated above, the invention also provides a mold per se, obtainable or not with the method for manufacturing the 3D item as indicated above, such as in a further aspect a mold comprising an outer layer and a support structure with cavities, wherein the outer layer at least partly encloses the support structure, and wherein the cavities are at least partly filled with filler material. In a specific embodiment, the mold is (thus) obtainable by the method as defined herein. Further, as indicated above, especially the filler material may comprise a material having a higher thermal conductivity than the support structure. Further, in an embodiment the outer layer and the support structure differ in one or more of (a) chemical composition, (b) density, and (c) surface texture.

In an embodiment, in the order of e.g. 1-80 %, such as 2-60 %, like 5-40 % of the volume of the 3D item, such as the mold, may be occupied by the cavity volumes, the remainder being essentially the outer layer and the support structure. Further, the cavities may have volumes of at least 100 µm³, such as at least 20 µm³, like 500 µm³, such as up to 100 ml, such as e.g. up to 50 ml, like up to 10 ml, like up to 1 ml, or even smaller. The cavities may have different shapes, and need not all to be equally shaped.

The above indicated method for manufacturing a 3D item, as well as the mold, are thus especially an FDM method and FDM (obtainable) mold, respectively. Hence, the invention especially provides a method for manufacturing a 3D item by fused deposition modeling (e.g. with the FDM printer as described herein).

Hence, as indicated above, the invention also provides a method wherein the thus obtained 3D item is used as mold for replication purposes, such as a method for producing a (3D) object ("object"), such method comprising at least partly filling a mold with a curable material (especially by injection molding), at least partially curing said curable material to provide said object comprising cured material, wherein the mold comprises an outer layer and a support structure with cavities, wherein the outer layer at least partly encloses the support structure, and further especially also removing the object from said mold. The mold that may be used in this method, may especially be a mold comprising an outer layer and a support structure with cavities, wherein the outer layer at least partly encloses the support structure, and wherein (i) the cavities are at least partly filled with filler material, and/or (ii) the outer layer and the support structure differ in one or more of (a) chemical composition, (b) density, and (c) surface texture. Hence, the mold is especially obtainable by the method as described above. Further, in a specific embodiment, especially relevant for many replicating processes, the filler material comprises a material having a higher thermal conductivity than the support structure. Hence, the method of the invention for producing a (3D) object is especially an injection molding method (using said mold as especially described herein).

One of the applications of the method may e.g. be to make optical components. In such instance the smoothness of the surface of the mold may be essential, such as in the case of making lenses, windows, etc. Hence, the curable material may include any material suitable for the desired application of the object, but in a specific embodiment the curable material comprises a silicone. Especially, the object may comprise an optical component, such as a lens, a window (i.e. a window comprising light transmissive material), etc.. Note that herein the term "3D item" especially refers to a 3D item that can be used as mold, and that the term "object" is used to distinguish from the 3D item that is used as mold and/or to distinguish from any 3D item not obtainable with the method for producing an object as described herein.

The method for manufacturing a 3D item, especially a mold, may e.g. be applied with a specific printer. In a further aspect, the invention also provides such printer, such as a 3D printer comprising (a) a printer nozzle and optionally (b) a filler material dosing unit, wherein the 3D printer is configured to provide a 3D item comprising an outer layer and a support structure with cavities, wherein the outer layer at least partly encloses the support structure, and wherein in specific embodiments the cavities are at least partly filled with filler material, wherein the 3D printer further optionally comprises (c) a post-treatment stage unit configured to post treat (especially in a post-treatment stage) at least part of the outer layer of the 3D item, especially for reducing surface roughness (of the outer layer). Therefore, the printer may especially comprise one or more of (i) the filler material dosing unit and (ii) the post-treatment stage unit. The 3D printer is (thus) especially a 3D FDM printer (or "FDM 3D" printer or simply "FDM printer").

Hence, the 3D printer may be configured to execute the above described method for manufacturing a 3D item, especially a mold. The printer nozzle may be used to provide the printable material, and thereby build the outer layer and support structure. The (optional) filler material dosing unit is configured to provide the filler material. In an embodiment, the filler material dosing unit may (also) include a printer nozzle. Further, the 3D printer may include one or more elements selected from the group consisting of a heater, a source of radiation (such as one or more of UV and IR), and a device to provide pressure (to the printed printable material), etc.. As indicated above, the 3D printer may especially comprise the (optional) post treatment stage unit. Such post treatment stage unit may include for instance one or more of a heating unit (configured to heat at least part of the outer layer of the printed 3D item), a unit configured to execute solvent dissolution (of at least part of the outer layer), and a coating unit (configured to coat at least part of the outer layer of the printed 3D item).

In yet a further embodiment, the 3D printer may further comprise (d) a transformation stage unit configured to transform (especially in a transformation stage) a liquid, such as a slurry or a paste, in a solid filler material, wherein the liquid, such as the slurry, comprising one or more of metal particles, ceramic particles, and carbon particles, and wherein the transformation stage unit is configured to cure and/or dry (especially in the transformation stage) the liquid, such as the slurry; and wherein the (optional) post-treatment stage unit is configured to apply one or more of (i) heating at least part of the outer layer, (ii) solvent dissolving at least part of the outer layer, and (iii) coating at least part of the outer layer (especially in the post-treatment stage). Alternative to a slurry, a paste may be used. Herein, the invention is further defined in relation to a slurry, but the invention is not limited to the slurry as embodiment of a liquid.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts an embodiment of a 3D item, such as a mold;
Figs. 2a-2b schematically depict a non-limiting number of embodiments for producing the 3D item, such as a mold;
Fig. 3a schematically depicts an enlargement of part of the 3D item of Fig. 1 before and after the post-treatment stage;
Fig. 3b schematically depicts another enlargement of an embodiment of the mold, after post-treatment;
Figs. 4a-4b schematically depict some aspects of the 3D printer.
The drawings are not necessarily on scale.

### DETAILED DESCRIPTION OF THE EMBODIMENTS

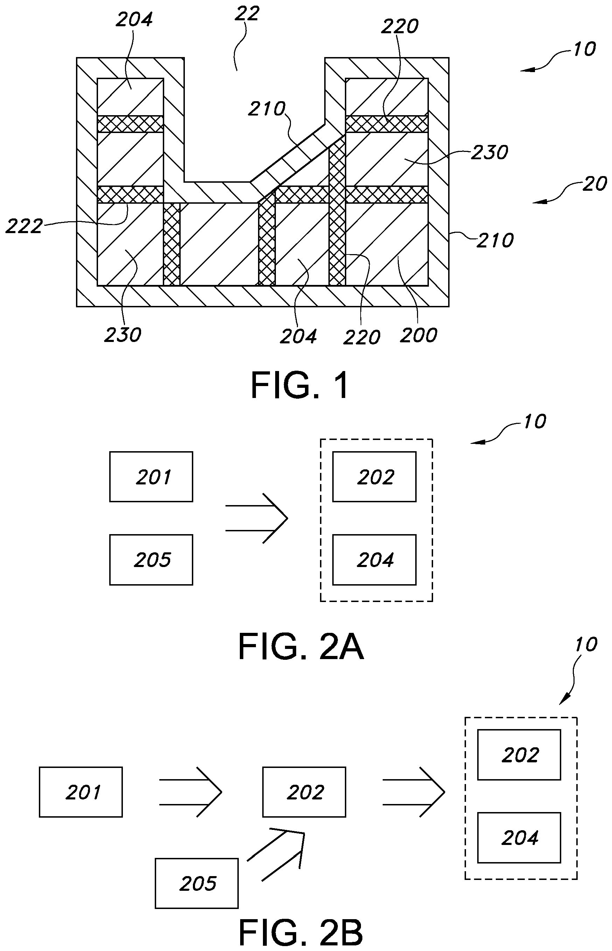

Fig. 1 schematically depicts a 3D item 10, especially a mold 20, comprising an outer layer 210 and a support structure 220 with cavities 230, wherein the outer layer at least partly encloses the support structure 220, and wherein the cavities 230 are at least partly filled with filler material 204. The bulk of the item 10 is indicated with reference 200. The bulk 200 may especially comprise the support structure 220, including cavities 230. Further, in the present invention one or more cavities 230 comprise filler material 204. Hence, in the object of the invention, the bulk 200 may also comprise the filler material 204. The material of the outer layer 210 and the support structure 220 may in embodiments be essentially identical. The filler material 204 will in general differ in composition from the support structure material.

Assuming the 3D item 10 to be a mold 20, as schematically depicted here, the mold 20 may include a mold opening or mold cavity, which is indicated with reference 22, and which is used to produce at least a part of a 3D object in, as is known from state of the art mold processing. Reference 222 indicates an outer layer of the support structure. Due to the post treatment of the 3D item 10, the outer layer 222 of the support structure will remain untreated whereas the outer layer 210 (or at least its surface) will be treated. This especially leads to differences, especially in the surfaces thereof. For instance, they may differ in one or more of (a) chemical composition, (b) density, and (c) surface texture.

Figs. 2a-2b schematically depict non-limiting steps of the process of manufacturing the 3D item 10, but not including the post treatment stage. These figures focus on the 3D printing stage. The filler material before filling the cavities may comprises a liquid, such as a slurry 205 comprising one or more of metal particles, ceramic particles, and carbon particles, and wherein the method may further comprise a transformation stage comprising transforming the slurry in the cavities in a solid filler material 204, wherein the transformation stage includes one or more of curing and drying. Herein, the liquid is further described with reference to a slurry 205, though liquids others than slurries may also be applied (and optionally transformed into filler material 204). Hence, the printing stage may e.g. include one or more of injecting and dispensing the filler material (or a precursor thereof such as a liquid, like slurry 205). Reference 202 indicates 3D printed material. When printing, the 3D printable material is flexible, whereas the 3D printed material is more rigid than the 3D printable material, as known in the art. One may in an embodiment print the 3D printable material and fill with filler material (or its precursor) at the same time, or use a plurality of 3D printing and filling steps, and thereby step by step generate the (ready) 3D item (see Fig. 2a). Alternatively, one may first at least partly, or even substantially entirely create the 3D support structure (and the outer layer 210), and then fill with filler material Fig. 2b). In both schematically depicted process embodiments, the filler material is provided as fluid filler material (slurry) 205, and then dried and/or cured. However, also other embodiments are possible, including filling with particulate filler material 204. Hence, Figs. 2a-2b schematically depict a non-limiting number of embodiments for producing the 3D item, such as a mold 20.

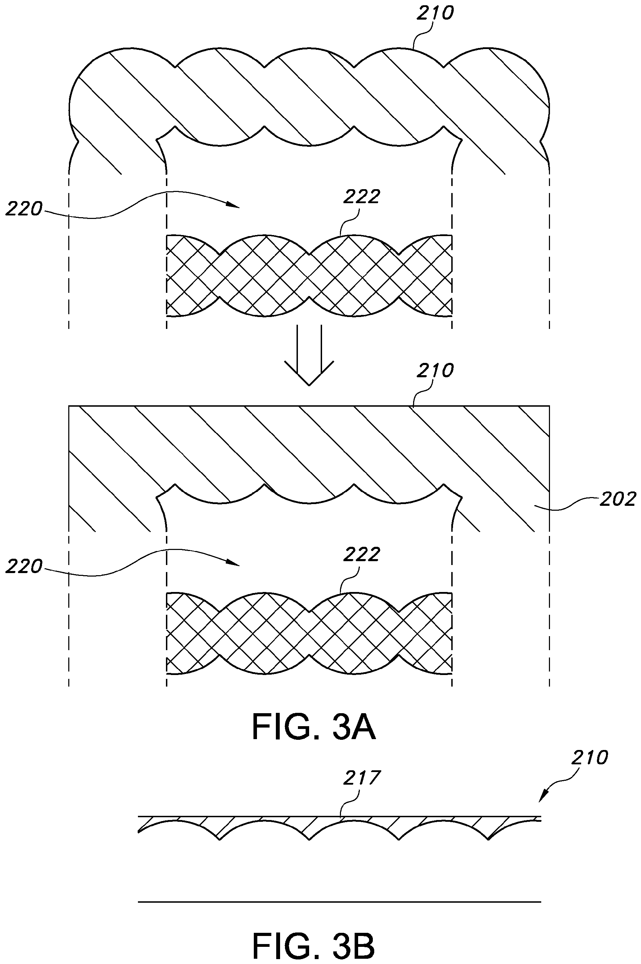

Fig. 3a schematically depicts an enlargement of part of the 3D item of Fig. 1 before and after the post-treatment stage. Before the post-treatment, the surface texture is relatively rough, and this applies for the outer layer 210 as well as the support structure 220. However, after the post treatment, the outer layer 210 may have been subjected to one or more methods for reducing surface roughness. The result is schematically depicted after the arrow. Such treatment will have no or less effect on the underlying support structure 220 (and the remainder of the 3D printed material 202). Fig. 3b schematically depicts another enlargement of an embodiment of the mold, after post-treatment. Here, the post-treatment may e.g. have been included a coating step. A coating 217 is depicted, which reduces the surface roughness of the outer layer 210 relative to the uncoated outer layer 210.

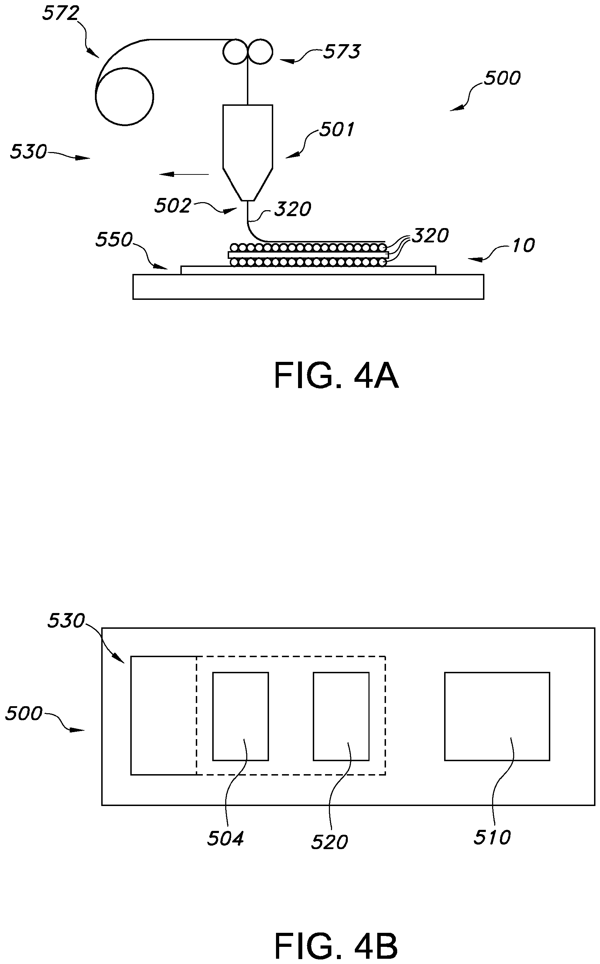

Figs. 4a-4b schematically depict some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as a FDM 3D printer head is schematically depicted. Reference 501 indicates the printer head. The 3D printer of the present invention may especially include a plurality of printer heads, though other embodiments are also possible. Reference 502 indicates a printer nozzle. The 3D printer of the present invention may especially include a plurality of printer nozzles, though other embodiments are also possible. Reference 320 indicates a filament of printable 3D printable material (such as indicated above). For the sake of clarity, not all features of the 3D printer have been depicted, only those that are of especial relevance for the present invention. The 3D printer 500 is configured to generate a 3D item 10 by depositing on a receiver item 550 a plurality of filaments 320 wherein each filament 20 comprises 3D printable material, such as having a melting point Tₘ. The 3D printer 500 is configured to heat the filament material upstream of the printer nozzle 502. This may e.g. be done with a device comprising one or more of an extrusion and/or heating function. Such device is indicated with reference 573, and is arranged upstream from the printer nozzle 502 (i.e. in time before the filament material leaves the printer nozzle 502). Reference 572 indicates a spool with material, especially in the form of a wire. The 3D printer 500 transforms this in a filament or fiber 320. Arranging filament by filament and filament on filament, a 3D item 10 may be formed.

Fig. 4b schematically depicts an embodiment of the 3D printer 500 including a post-treatment stage unit 510. The 3D printer comprises a printer stage unit 530, which at least comprises a printer head for printing with 3D printable material (see fig. 4a). Optionally, this printer stage unit 530 may comprise a material dosing unit 504, configured to provide filler material. Also optionally, especially in combination with the material dosing unit 504, the printer stage unit 530 may comprise a transformer stage unit 520. Especially, the transformation stage unit 520 may be configured to transform a slurry 205, e.g. provided by the material dosing unit 504, in a solid filler material 204. As the material dosing unit 504 and the transformation stage unit 520 are optionally included in the printer stage unit 530, dashed lines are used. Further, the 3D printer 500 may optionally comprise a post treatment unit 510. Optionally, the 3D printer device may include transporting means (not depicted) to transport the 3D printer from one stage to another stage. More functional elements and/or units than the herein schematically indicates elements and/or units may be comprised by the 3D printer 500.

It goes without saying that other features can be built into such a mold. For example when water cooling is needed during the use of the mold, then suitable channels can be designed and brought into the mold for enabling water cooling.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

### EXPERIMENTAL

Molds with support structure were made. The support structures and outer layers were e.g. made of ABS, poly styrene or PC. The cavities in the support structure were filled with highly thermally conductive graphite composite (graphite as filler material).

Two different parts were brought on top of each other and a molding cavity, i.e. the cavity which is used to fill with polymerizable material for creating a 3D object, is then filled with liquid silicone which is then polymerized. Subsequently the mold is heated and the silicon polymerizes (is cured). The mold is opened and the molded object is released. Different types of molds were used, some of which were made without the filler material and post-treatment for surface smoothening, some with only the post-treatment, some with only the filler material, and some with both the filler material and the post-treatment. An FDM made mold without surface treatment and filler material could not be used for replicating technologies. The mold deforms. The same applies to the molds with surface treatment but without the filler material. Some of the surface treatments, such as heating, lead to a deformation of the mold. Those with filler material were able to withstand replicating conditions such as elevated temperatures. However, only the mold after the post-treatment provided a 3D item that had a smooth surface and could be relatively easily removed from the mold. A lens with a relatively very smooth surface was obtained.

## Claims

1. A method for manufacturing a 3D item (10), wherein the 3D item (10) comprises an outer layer (210) and a support structure (220) with cavities (230), wherein the outer layer (210) at least partly encloses the support structure (220), and wherein the method comprises:
(a) a 3D printing stage comprising 3D printing with fused deposition modeling 3D printable material (201) the outer layer (210) and the support structure (220) and **characterized by** at least partly filling the cavities (230) with a filler material (204); and
(b) a post-treatment stage comprising post treating at least part of the outer layer (210) for reducing surface roughness.

2. The method according to claim 1, wherein the 3D item (10) is a mold (20).

3. The method according to any one of the preceding claims, wherein the 3D printable material (201) comprises a curable material, and wherein the 3D printing method includes curing at least part of the printable 3D printable material (201) to provide 3D printed material (202).

4. The method according to any one of the preceding claims, wherein the filler material (204) comprises a material having a higher thermal conductivity than the support structure (220).

5. The method according to claim 4, wherein the filler material (204) before filling the cavities comprises a slurry (205) comprising one or more of metal particles, ceramic particles, and carbon particles, and wherein the method further comprises a transformation stage comprising transforming the slurry (205) in the cavities (230) in a solid filler material (204), wherein the transformation stage includes one or more of curing and drying.

6. The method according to any one of the preceding claims, wherein the post-treatment stage comprises one or more of (a) heating at least part of the outer layer (210), (b) solvent dissolving at least part of the outer layer (210), and (c) coating at least part of the outer layer (210), and wherein the thus obtainable outer layer (210) and the support structure (220) differ in one or more of (a) chemical composition, (b) density, and (c) surface texture.

7. A method for producing an object (1010), wherein the method comprises at least partly filling a mold (20) obtainable by the method according to any one of claims 1-6 with a curable material (1201), at least partially curing said curable material (1201) to provide said object (1010) comprising cured material (1202), wherein the mold (20) comprises an outer layer (210) and a support structure (220) with cavities (230), wherein the outer layer (210) at least partly encloses the support structure (220), and wherein the cavities (230) are at least partly filled with filler material (204), and removing the object from said mold (20), wherein the filler material (204) comprises a material having a higher thermal conductivity than the support structure (220).

8. The method according to claim 7, wherein the curable material comprises a silicone, and wherein the object (1010) comprises an optical component.

9. The method according to any one of claims 7-8, wherein the outer layer (210) and the support structure (220) differ in one or more of (a) chemical composition, (b) density, and (c) surface texture.

10. A mold (20) obtainable by the method according to any one of claims 1-6 and comprising an outer layer (210) and a support structure (220) with cavities (230), wherein the outer layer (210) at least partly encloses the support structure (220), wherein the cavities are at least partly filled with filler material (204), and wherein the filler material (204) comprises a material having a higher thermal conductivity than the support structure (210).

11. The mold (20) according to claim 10, wherein the outer layer (210) and the support structure (220) differ in one or more of (a) chemical composition, (b) density, and (c) surface texture.

12. A fused deposition modeling 3D printer (500) comprising (a) a printer nozzle (502) and (b) a filler material dosing unit (504), **characterized in that** the 3D printer (500) is configured to provide a 3D item (10) comprising an outer layer (210) and a support structure (220) with cavities (230), wherein the outer layer (210) at least partly encloses the support structure (220), and wherein the cavities (210) are at least partly filled with filler material (204), wherein the 3D printer (500) further comprises (c) a post-treatment stage unit (510) configured to post treat at least part of the outer layer (210) of the 3D item (10) for reducing surface roughness.

13. The 3D printer (500) according to claim 12, further comprising a transformation stage unit (520) configured to transform a slurry (205) in a solid filler material (204), wherein the slurry (205) comprising one or more of metal particles, ceramic particles, and carbon particles, and wherein the transformation stage unit (520) is configured to cure and/or dry the slurry (205); and wherein the post-treatment stage unit (510) is configured to apply one or more of (i) heating at least part of the outer layer (210), (ii) solvent dissolving at least part of the outer layer (210), and (iii) coating at least part of the outer layer (210).

## Patentansprüche

1. Verfahren zur Herstellung eines 3D-Gegenstands (10), wobei der 3D-Gegenstand (10) eine äußere Schicht (210) und eine Trägerstruktur (220) mit Hohlräumen (230) umfasst, wobei die äußere Schicht (210) die Trägerstruktur (220) zumindest teilweise umschließt, und wobei das Verfahren umfasst:
(a) eine 3D-Druckstufe, in der ein 3D-Druck der äußeren Schicht (210) und der Trägerstruktur (220) mit Hilfe von 3D-druckbarem Fused-Deposition-Modeling-Material (201) erfolgt,
**dadurch gekennzeichnet, dass**
die Hohlräume (230) zumindest teilweise mit einem Füllmaterial (204) gefüllt werden; sowie
(b) eine Nachbehandlungsstufe, in der zumindest ein Teil der äußeren Schicht (210) zur Reduzierung von Oberflächenrauigkeit nachbehandelt wird.

2. Verfahren nach Anspruch 1, wobei der 3D-Gegenstand (10) eine Form (20) ist.

3. Verfahren nach einem der vorangegangenen Ansprüche, wobei das 3D-druckbare Material (201) ein härtbares Material umfasst, und wobei das 3D-Druckverfahren das Aushärten von zumindest einem Teil des druckbaren, 3D-druckbaren Materials (201) beinhaltet, um in 3D gedrucktes Material (202) vorzusehen.

4. Verfahren nach einem der vorangegangenen Ansprüche, wobei das Füllmaterial (204) ein Material enthält, das eine höhere thermische Leitfähigkeit als die Trägerstruktur (220) aufweist.

5. Verfahren nach Anspruch 4, wobei das Füllmaterial (204) vor Einfüllen in die Hohlräume eine Suspension (Slurry) (205) mit einem oder mehreren Metallpartikeln, Keramikpartikeln und Kohlenstoffpartikeln enthält, und wobei das Verfahren weiterhin eine Transformationsstufe umfasst, in der die Suspension (205) in den Hohlräumen (230) in ein festes Füllmaterial (204) transformiert wird, wobei die Transformationsstufe einen oder mehrere Aushärtungs- und Trocknungsvorgänge beinhaltet.

6. Verfahren nach einem der vorangegangenen Ansprüche, wobei die Nachbehandlungsstufe einen oder mehrere der folgenden Vorgänge beinhaltet: (a) Erhitzen von zumindest einem Teil der äußeren Schicht (210), (b) Lösen von zumindest einem Teil der äußeren Schicht (210) mittels Lösungsmittel, sowie (c) Beschichten von zumindest einem Teil der äußeren Schicht (210), und wobei die so zu erhaltende äußere Schicht (210) und die Trägerstruktur (220) in einer oder mehreren der folgenden differieren: (a) der chemischen Zusammensetzung, (b) der Dichte sowie (c) der Oberflächentextur.

7. Verfahren zur Erzeugung eines Objekts (1010), wobei gemäß dem Verfahren eine durch das Verfahren nach einem der Ansprüche 1-6 vorzusehende Form (20) mit einem härtbaren Material (1201) zumindest teilweise gefüllt wird, das härtbare Material (1201) zumindest teilweise ausgehärtet wird, um das, das härtbare Material (1202) enthaltende Objekt (1010) bereitzustellen, wobei die Form (20) eine äußere Schicht (210) und eine Trägerstruktur (220) mit Hohlräumen (230) umfasst, wobei die äußere Schicht (210) die Trägerschicht (220) zumindest teilweise umschließt, und wobei die Hohlräume (230) zumindest teilweise mit Füllmaterial (204) gefüllt werden und das Objekt aus der Form (20) entfernt wird, wobei das Füllmaterial (204) ein Material enthält, das eine höhere thermische Leitfähigkeit als die Trägerstruktur (220) aufweist.

8. Verfahren nach Anspruch 7, wobei das härtbare Material ein Silicon enthält, und wobei das Objekt (1010) eine optische Komponente umfasst.

9. Verfahren nach einem der Ansprüche 7-8, wobei die äußere Schicht (210) und die Trägerstruktur (220) in einer oder mehreren der folgenden differieren: (a) der chemischen Zusammensetzung, (b) der Dichte sowie (c) der Oberflächentextur.

10. Form (20), die durch das Verfahren nach einem der Ansprüche 1-6 erhalten werden kann und eine äußere Schicht (210) sowie eine Trägerstruktur (220) mit Hohlräumen (230) umfasst, wobei die äußere Schicht (210) die Trägerstruktur (220) zumindest teilweise umschließt, wobei die Hohlräume zumindest teilweise mit Füllmaterial (204) gefüllt sind, und wobei das Füllmaterial (204) ein Material enthält, das eine höhere thermische Leitfähigkeit als die Trägerstruktur (220) aufweist.

11. Form (20) nach Anspruch 10, wobei die äußere Schicht (210) und die Trägerstruktur (220) in einer oder mehreren der folgenden differieren: (a) der chemischen Zusammensetzung, (b) der Dichte sowie (c) der Oberflächentextur.

12. Fused-Deposition-Modeling-3D-Drucker (500) mit (a) einer Druckerdüse (502) und (b) einer Füllmaterial-Dosiereinheit (504),
**dadurch gekennzeichnet, dass**
der 3D-Drucker (500) so konfiguriert ist, dass er einen 3D-Gegenstand (10) vorsieht, der eine äußere Schicht (210) und eine Trägerstruktur (220) mit Hohlräumen (230) umfasst, wobei die äußere Schicht (210) die Trägerstruktur (220) zumindest teilweise umschließt, und wobei die Hohlräume (210) zumindest teilweise mit einem Füllmaterial (204) gefüllt sind, wobei der 3D-Drucker (500) weiterhin (c) eine Nachbehandlungsstufeneinheit (510) umfasst, die so konfiguriert ist, dass sie zumindest einen Teil der äußeren Schicht (210) des 3D-Gegenstands (10) nachbehandelt, um Oberflächenrauigkeit zu reduzieren.

13. 3D-Drucker (500) nach Anspruch 12, der weiterhin eine Transformationsstufeneinheit (520) umfasst, die so konfiguriert ist, dass sie eine Suspension (Slurry) (205) in ein festes Füllmaterial (204) transformiert, wobei die Suspension (205) ein oder mehrere Metallpartikel, Keramikpartikel sowie Kohlenstoffpartikel enthält, und wobei die Transformationsstufeneinheit (520) so konfiguriert, dass sie die Suspension (205) aushärtet und/oder trocknet; und wobei die Nachbehandlungsstufeneinheit (510) so konfiguriert ist, dass sie einen oder mehrere Schritte der folgenden anwendet: (i) Erhitzen von zumindest einem Teil der äußeren Schicht (210), (ii) Lösen von zumindest einem Teil der äußeren Schicht (210) mittels Lösungsmittel, sowie (iii) Beschichten von zumindest einem Teil der äußeren Schicht (210).

## Revendications

1. Procédé pour fabriquer un article 3D (10), dans lequel l'article 3D (10) comprend une couche extérieure (210) et une structure de support (220) avec des cavités (230), dans lequel la couche extérieure (210) entoure au moins partiellement la structure de support (220), et dans lequel le procédé comprend :
(a) une étape d'impression 3D comprenant l'impression 3D, avec un matériau imprimable 3D par dépôt de filament en fusion (201), de la couche extérieure (210) et de la structure de support (220) et **caractérisé par** le remplissage au moins partiel des cavités (230) avec un matériau de remplissage (204) ; et
(b) une étape de post-traitement comprenant le post-traitement d'au moins une partie de la couche extérieure (210) pour réduire la rugosité de surface.

2. Procédé selon la revendication 1, dans lequel l'article 3D (10) est un moule (20).

3. Procédé selon l'une quelconque des revendications précédentes, dans lequel le matériau imprimable 3D (201) comprend un matériau durcissable, et dans lequel le procédé d'impression 3D inclut le durcissement d'au moins une partie du matériau imprimable 3D (201) pour fournir un matériau imprimé 3D (202).

4. Procédé selon l'une quelconque des revendications précédentes, dans lequel le matériau de remplissage (204) comprend un matériau possédant une conductivité thermique plus élevée que celle de la structure de support (220).

5. Procédé selon la revendication 4, dans lequel le matériau de remplissage (204), avant de remplir les cavités, comprend une suspension (205) comprenant une ou plusieurs parmi des particules de métal, des particules de céramique, et des particules de carbone, et dans lequel le procédé comprend en outre une étape de transformation comprenant la transformation de la suspension (205) dans les cavités (230) en un matériau de remplissage solide (204), dans lequel l'étape de transformation inclut un ou plusieurs parmi le durcissement et le séchage.

6. Procédé selon l'une quelconque des revendications précédentes, dans lequel l'étape de post-traitement comprend un ou plusieurs parmi (a) le chauffage d'au moins une partie de la couche extérieure (210), (b) la dissolution au solvant d'au moins une partie de la couche extérieure (210), et (c) le revêtement d'au moins une partie de la couche extérieure (210), et dans lequel la couche extérieure pouvant être ainsi obtenue (210) et la structure de support (220) diffèrent en une ou plusieurs parmi (a) la composition chimique, (b) la densité, et (c) la texture de surface.

7. Procédé pour produire un objet (1010), dans lequel le procédé comprend le remplissage au moins partiel d'un moule (20) pouvant être obtenu par le procédé selon l'une quelconque des revendications 1 à 6 avec un matériau durcissable (1201), le durcissement au moins partielle dudit matériau durcissable (1201) pour fournir ledit objet (1010) comprenant un matériau durci (1202), dans lequel le moule (20) comprend une couche extérieure (210) et une structure de support (220) avec des cavités (230), dans lequel la couche extérieure (210) entoure au moins partiellement la structure de support (220), et dans lequel les cavités (230) sont au moins partiellement remplies avec un matériau de remplissage (204), et l'enlèvement de l'objet à partir dudit moule (20), dans lequel le matériau de remplissage (204) comprend un matériau possédant une conductivité thermique plus élevée que celle de la structure de support (220).

8. Procédé selon la revendication 7, dans lequel le matériau durcissable comprend une silicone, et dans lequel l'objet (1010) comprend un composant optique.

9. Procédé selon l'une quelconque des revendications 7 et 8, dans lequel la couche extérieure (210) et la structure de support (220) diffèrent en une ou plusieurs parmi (a) la composition chimique, (b) la densité, et (c) la texture de surface.

10. Moule (20) pouvant être obtenu par le procédé selon l'une quelconque des revendications 1 à 6 et comprenant une couche extérieure (210) et une structure de support (220) avec des cavités (230), dans lequel la couche extérieure (210) entoure au moins partiellement la structure de support (220), dans lequel les cavités sont au moins partiellement remplies avec un matériau de remplissage (204), et dans lequel le matériau de remplissage (204) comprend un matériau possédant une conductivité thermique plus élevée que celle de la structure de support (220).

11. Moule (20) selon la revendication 10, dans lequel la couche extérieure (210) et la structure de support (220) diffèrent en une ou plusieurs parmi (a) la composition chimique, (b) la densité, et (c) la texture de surface.

12. Imprimante 3D par dépôt de filament en fusion (500) comprenant (a) une buse d'imprimante (502) et (b) une unité de dosage de matériau de remplissage (504), **caractérisé en ce que**
l'imprimante 3D (500) est configurée pour fournir un article 3D (10) comprenant une couche extérieure (210) et une structure de support (220) avec des cavités (230), dans laquelle la couche extérieure (210) entoure au moins partiellement la structure de support (220), et dans laquelle les cavités (210) sont au moins partiellement remplies avec un matériau de remplissage (204), dans laquelle l'imprimante 3D (500) comprend en outre (c) une unité à étape de post-traitement (510) configurée pour réaliser le post-traitement d'au moins une partie de la couche extérieure (210) de l'article 3D (10) pour réduire la rugosité de surface.

13. Imprimante 3D (500) selon la revendication 12, comprenant en outre une unité à étape de transformation (520) configurée pour transformer une suspension (205) en un matériau de remplissage solide (204), dans laquelle la suspension (205) comprenant une ou plusieurs parmi des particules de métal, des particules de céramique, et des particules de carbone, et dans laquelle l'unité à étape de transformation (520) est configurée pour durcir et/ou sécher la suspension (205) ; et dans laquelle l'unité à étape de post-traitement (510) est configurée pour appliquer un ou plusieurs parmi (i) le chauffage au moins partiel de la couche extérieure (210), (ii) la dissolution au solvant d'au moins une partie de la couche extérieure (210), et (iii) le revêtement d'au moins une partie de la couche extérieure (210).
